# FASCICULE DE BREVET EUROPEEN

(11) **EP 4 447 331 B1**
(45) Date de publication et mention de la délivrance du brevet: **26.03.2025**
(21) Numéro de dépôt: 24169363.9
(22) Date de dépôt: 10.04.2024
(51) Int. Cl.: H04B 3/54, H04Q 9/00

(54) **PROCEDE ET SYSTEME DE COMMUNICATION DANS UN RESEAU DE COMMUNICATION COMPORTANT DES N UDS DOTES DE MOYENS DE COMMUNICATION RADIO ET CPL ET DES N UDS DOTES UNIQUEMENT DE MOYENS DE COMMUNICATION RADIO**
VERFAHREN UND SYSTEM ZUR KOMMUNIKATION IN EINEM KOMMUNIKATIONSNETZWERK MIT KNOTEN MIT FUNK- UND CPL-KOMMUNIKATIONSMITTELN UND KNOTEN MIT AUSSCHLIESSLICHEN FUNKKOMMUNIKATIONSVORRICHTUNGEN
METHOD AND SYSTEM FOR COMMUNICATING IN A COMMUNICATION NETWORK COMPRISING NODES HAVING RADIO AND PLC COMMUNICATION MEANS AND NODES HAVING ONLY RADIO COMMUNICATION MEANS

(30) Priorité: 14.04.2023 FR 2303758
(43) Date de publication de la demande: 16.10.2024
(73) Titulaire: SAGEMCOM ENERGY & TELECOM SAS, 92270 Bois-Colombes (FR)
(72) Inventeur: RAZAZIAN, Kaveh, 92270 BOIS-COLOMBES (FR)
(74) Mandataire: Cabinet Le Guen Maillet

(56) Documents cités:
- EP-A1- 4 142 244
- US-A1- 2019 296 797
- US-B1- 11 128 554

## Description

### DOMAINE TECHNIQUE

La présente invention concerne un procédé et un système de communication dans un réseau de communication comportant des nœuds dotés de moyens de communication radio et CPL et des nœuds dotés uniquement de moyens de communication radio.

### ETAT DE LA TECHNIQUE ANTERIEURE

Les communications par courants porteurs en ligne CPL (PLC « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un nœud de base (aussi appelé « concentrateur de données ») du réseau, auprès de nœuds tels que des compteurs électriques intelligents (« smart electricity meters » en anglais), de données de relevés de consommation énergétique que lesdits compteurs électriques intelligents sont respectivement en charge de surveiller.

A titre d'exemple, dans une évolution de la norme G3-PLC, un canal radio RF (acronyme de radio-fréquence) peut être utilisé à la place d'une desdites bandes fréquentielles PLC comme cela est défini dans la norme intitulée spécification pour les réseaux G3-PLC à bande étroite OFDM de mars 2022 (en anglais Narrowband OFDM PLC specifications for G3 PLC networks).

D'autres compteurs intelligents, tels que les compteurs de consommation de fluide tel que du gaz ou de l'eau ne sont alimentés que par une batterie et communiquent par radio en utilisant par exemple le protocole Zibbee ou le protocole Wireless M-Bus (Wireless Meter Bus) qui est une adaptation de la norme filaire M-Bus en radio. Le Wireless M-Bus représente le standard de communication européen pour les télérelèves. Pour qu'un compteur de consommation de fluide puisse communiquer avec un compteur électrique intelligent, il est nécessaire d'équiper ce compteur par un module radio conforme au même protocole utilisé par le compteur électrique (par exemple : le protocole hybride G3-PLC/RF, le protocole hybride PRIME/RF , le protocole Wi-SUN, ...). Néanmoins, si l'on veut garantir un bon fonctionnement dans le temps des compteurs de fluide, il est nécessaire d'optimiser la consommation en énergie électrique de ceux-ci ce qui rend l'utilisation de la spécification pour les réseaux hybrides PLC et RF (exemple G3-PLC hybride et PRIME hybride) ou pour les réseaux RF (exemple Wi-SUN) impossible.

La demande de brevet US 2019/296797 divulgue un système qui comprend un réseau de communication CPL doté d'un protocole de routage réactif.

### EXPOSE DE L'INVENTION

A cette fin, selon un premier aspect, un mode de réalisation propose un procédé de communication dans un réseau de communication comportant des nœuds dotés de moyens de communication radio et CPL, le concentrateur de données et les nœuds dotés de moyens de communication radio et CPL formant un réseau de communication maillé, les nœuds comportant des nœuds dotés de moyens de communication radio et CPL jouant un rôle de relais pour augmenter la portée des communications dans le réseau de communication maillé, les nœuds dotés de moyens de communication radio et CPL communiquant à l'aide d'un protocole de communication prédéterminé, traitant des messages diffusés et traitant des requêtes d'authentification d'autres nœuds, caractérisé en ce que le système comporte en outre des nœuds dotés de moyens de communication uniquement radio aptes à communiquer en partie conformément au même protocole utilisé par les nœuds dotés de moyens de communication radio et CPL et en ce que le procédé comporte les étapes, exécutées par chaque nœud doté de moyens de communication uniquement radio, de :
- réception de messages diffusés,
- non-traitement des messages diffusés,
- réception de messages de requête d'association,
- non-traitement des messages de requête d'association.

Un mode de réalisation concerne aussi un système de communication dans un réseau de communication comportant des nœuds dotés de moyens de communication radio et CPL, le concentrateur de données et les nœuds dotés de moyens de communication radio et CPL formant un réseau de communication maillé, les nœuds comportant des nœuds dotés de moyens de communication radio et CPL jouant un rôle de relais pour augmenter la portée des communications dans le réseau de communication maillé, les nœuds dotés de moyens de communication radio et CPL communiquant à l'aide d'un protocole de communication prédéterminé, traitant des messages diffusés et traitant des requêtes d'authentification d'autres nœuds, caractérisé en ce que le système comporte en outre des nœuds dotés de moyens de communication uniquement radio aptes à communiquer en partie conformément au même protocole utilisé par les nœuds dotés de moyens de communication radio et CPL et en ce que les nœuds dotés de moyens de communication uniquement radio comportent :
- des moyens de réception de messages diffusés,
- des moyens de non-traitement des messages diffusés,
- des moyens de réception de messages de requête d'association,
- des moyens de non-traitement des messages de requête d'association.

Ainsi, les nœuds dotés de moyens de communication uniquement radio sont aptes à communiquer avec les nœuds dotés de moyens de communication radio et CPL sans que ceux-ci utilisent un autre protocole de communication que celui utilisé par les nœuds dotés de moyens de communication radio et CPL dans le réseau de communication.

En n'implémentant pas certaines fonctionnalités du protocole de communication, la consommation en énergie électrique des nœuds dotés de moyens de communication uniquement radio devient compatible pour des nœuds fonctionnant sur batterie.

Selon un mode de réalisation particulier, lorsqu'un nœud doté de moyens de communication uniquement radio est introduit dans le réseau de communication, le nœud doté de moyens de communication uniquement radio :
- sélectionne un nœud doté de moyens de communication radio et CPL,
- transfère un message au nœud sélectionné pour une authentification du nœud doté de moyens de communication uniquement radio dans le réseau de communication,
- passe dans un mode de fonctionnement dans lequel les moyens de communication radio sont désactivés pendant une période prédéterminée si l'authentification n'a pas réussi,
- transfère un message au nœud sélectionné pour une création d'une route avec le nœud sélectionné si l'authentification a réussi,
- passe dans un mode de fonctionnement dans lequel les moyens de communication radio sont désactivés pendant une période prédéterminée si la création de route n'a pas réussi.

Ainsi la consommation en énergie électrique des nœuds dotés de moyens de communication uniquement radio est réduite.

Selon un mode de réalisation particulier, si la création de la route a réussi, le nœud doté de moyens de communication uniquement radio :
- transfère un message au nœud sélectionné pour une association du nœud doté de moyens de communication uniquement radio avec le nœud sélectionné,
- transfère un message au nœud auquel il est associé si l'association a réussi,
- passe dans le mode de fonctionnement dans lequel les moyens de communication radio sont désactivés pendant une période prédéterminée si le message a été reçu par le nœud auquel il est associé.

Selon un mode de réalisation particulier, si la création de la route a réussi, le nœud doté de moyens de communication uniquement radio :
- passe dans le mode de fonctionnement dans lequel les moyens de communication radio sont désactivés pendant une période prédéterminée si l'association n'a pas réussi.

Selon un mode de réalisation particulier, à l'issue de la période prédéterminée, le nœud passe dans un mode dans lequel les moyens de communication radio sont réactivés et le nœud :
- recherche un nœud doté de moyens de communication radio et CPL différent du nœud avec lequel l'association n'a pas réussi.

Selon un mode de réalisation particulier, le concentrateur de données est configuré pour collecter, auprès des nœuds dotés de moyens de communication radio et CPL, des données de relevés de consommation énergétique d'installations électriques que lesdits nœuds sont respectivement en charge de surveiller et les nœuds dotés de moyens de communication uniquement radio sont des compteurs de fluide intelligents.

Un mode particulier concerne aussi un produit programme d'ordinateur. Il comprend des instructions pour implémenter, par un équipement, le procédé selon l'un des modes de réalisation précédents, lorsque ledit programme est exécuté par un processeur de l'équipement.

Un mode particulier concerne aussi un support de stockage. Il stocke un programme d'ordinateur comprenant des instructions pour implémenter, par un dispositif nœud, le procédé selon l'un des modes de réalisation précédents, lorsque ledit programme est exécuté par un processeur du dispositif nœud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un exemple de réseau de communication selon la présente invention ;
[Fig. 2] illustre schématiquement l'architecture d'un nœud doté uniquement de moyens de communication radio selon un mode de réalisation ;
[Fig. 3] illustre schématiquement l'architecture d'un nœud doté de moyens de communication radio et CPL selon un mode de réalisation ;
[Fig.4] illustre un exemple d'un procédé d'authentification et de création de route exécuté par un nœud feuille selon un mode de réalisation ;
[Fig.5] illustre un exemple d'un procédé d'association exécuté par un nœud doté uniquement de moyens de communication radio selon un mode de réalisation ;
[Fig.6] illustre un exemple d'un procédé d'association exécuté par un nœud doté de moyens de communication radio et CPL selon un mode de réalisation ;
[Fig.7] illustre un exemple d'un procédé de traitement de messages exécuté par un nœud doté uniquement de moyens de communication radio selon un mode de réalisation.

### EXPOSE DETAILLE DE MODES DE REALISATION

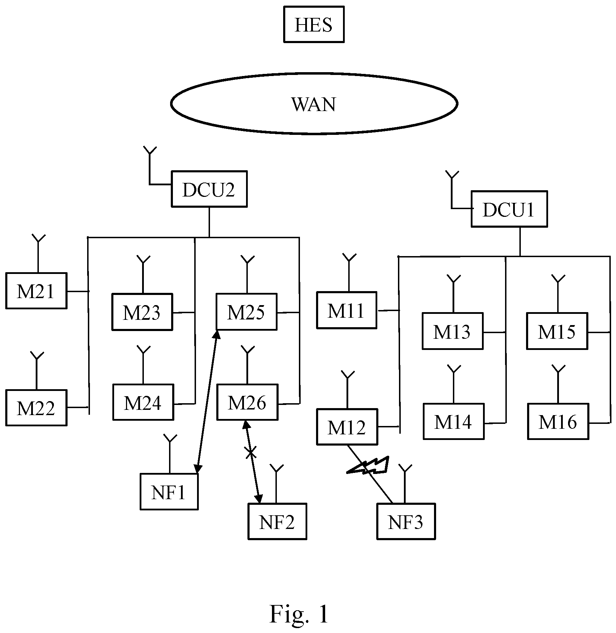

La Fig. 1 illustre un exemple de réseau de communication dans un mode de réalisation.

Dans l'exemple de la Fig. 1, le réseau de communication comporte un système tête de réseau HES qui est relié par l'intermédiaire d'un réseau de communication à une pluralité de concentrateurs de données, ici deux dans la Fig. 1 DCU1 et DCU2. Le concentrateur de données DCU1 est relié à une pluralité de nœuds dotés de moyens de communication radio et CPL notés M11 à M16 et le concentrateur de données DCU2 est relié à une pluralité de nœuds dotés de moyens de communication radio et CPL notés M21 à M26. Le rôle du ou des systèmes de tête de réseau HES est d'acquérir automatiquement les données des compteurs, en évitant toute intervention humaine, et de surveiller les paramètres acquis à partir des nœuds. Le système tête de réseau HES gère la connectivité et planifie la collecte de données à partir de l'infrastructure de comptage, y compris les nœuds et la communication.

Les nœuds dotés de moyens de communication radio et CPL M11 à M16 et M21 à M26 sont par exemple des compteurs électriques intelligents et peuvent communiquer avec les différents nœuds dotés de moyens de communication radio et CPL et avec les concentrateurs de données DCU1 et DCU2 à travers leurs interfaces de communication PLC ou RF.

Les nœuds dotés de moyens de communication radio et CPL implémentent la spécification pour les réseaux hybrides PLC et RF (par exemple : G3-PLC hybride ou PRIME hybride) ou les réseaux RF uniquement (par exemple Wi-SUN pour Wireless Smart Utility Network).

Selon l'invention, des nœuds NF1, NF2 et NF3 appelés par la suite nœuds feuilles sont insérés dans le réseau de communication. Les nœuds feuilles sont aptes à communiquer uniquement par leur interface radio avec les nœuds dotés de moyens de communication radio et CPL M11 à M16 et M21 à M26 et implémentent en partie la spécification pour les réseaux hybrides PLC et RF tel que par exemple, G3-PLC hybride ou PRIME hybride ou les réseaux RF uniquement (tel que par exemple Wi-SUN.

Les nœuds feuilles NF1, NF2 et NF3 sont par exemple des compteurs de fluide intelligents.

Les nœuds feuilles NF1 NF2 et NF3 sont aptes à s'authentifier d'une manière automatique au réseau et acquérir les identifiants de réseaux (l'adresse MAC réduite, l'identifiant de réseau et la clé de sécurité) nécessaires pour établir une communication bidirectionnelle sécurisée avec un agent d'authentification.

Les nœuds feuilles NF1 NF2 et NF3 sont aptes à établir une route en utilisant des messages mono-diffusés vers un nœud auprès duquel il est authentifié.

Les nœuds feuilles NF1 NF2 et NF3 sont aptes à sélectionner et s'attacher à un nœud doté de moyens de communication radio et CPL appelé nœud parent qui est en charge de stocker les messages reçus du ou chaque nœud feuille pour être envoyés à la demande vers le concentrateur de données et le système tête de réseau.

Etant authentifié dans le réseau, un nœud feuille selon l'invention et contrairement aux nœuds dotés de moyens de communication radio et CPL, ignore tous les paquets diffusés au niveau de la sous-couche MAC (short MAC destination address = 0xFFFF), ignore toutes les requêtes d'authentification (en anglais Beacon request) au réseau diffusées par les nœuds non authentifiés et communique uniquement en unicast avec son parent sélectionné.

Dans l'exemple de la Fig. 1, le nœud feuille NF1 est attaché et associé au nœud doté de moyens de communication radio et CPL M25, le nœud feuille NF2 est attaché au nœud doté de moyens de communication radio et CPL M26 mais n'est pas associé avec celui-ci et le nœud feuille NF3 est attaché et associé au nœud doté de moyens de communication radio et CPL M12 mais perd le lien de communication avec le nœud doté de moyens de communication radio et CPL M12.

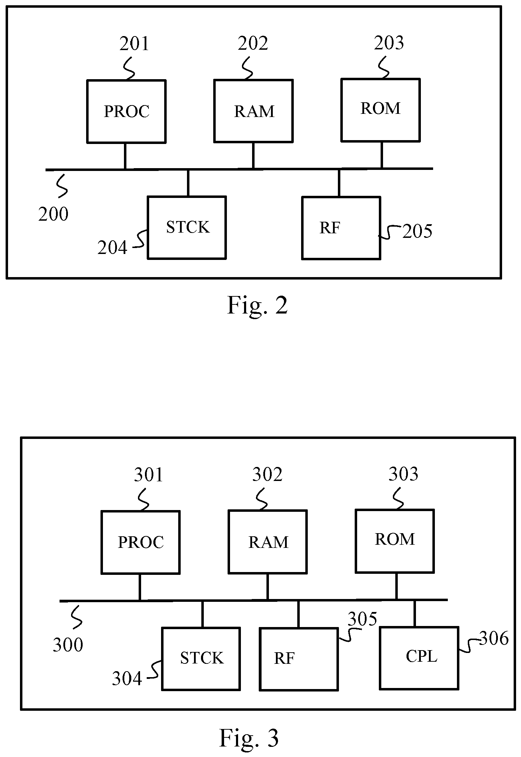

La Fig. 2 illustre schématiquement l'architecture d'un nœud doté uniquement de moyens de communication radio selon un mode de réalisation.

Selon l'exemple d'architecture matérielle représenté à la Fig. 2, les nœuds NF1, NF2 et NF3 comprennent, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; une interface de communication radio RF 205 permettant au nœud de communiquer avec au moins un nœud parent.

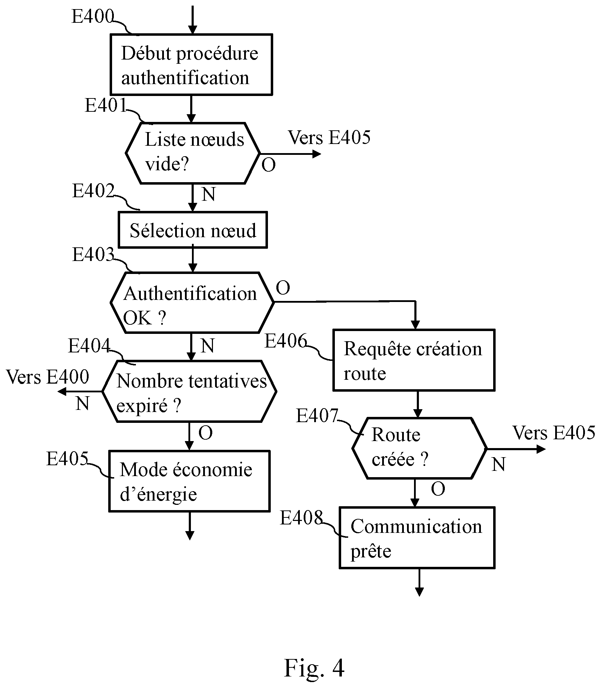

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le nœud est mis sous tension, le processeur 201 est capable de lire de la RAM 202 des instructions et de les exécuter. Ces instructions forment un programme d'ordinateur causant la mise en œuvre, par le processeur 201, de tout ou partie du procédé décrit en relation avec les Figs. 4, 5 et 7.

Le procédé décrit ci-après en relation avec les Figs. 4, 5 et 7 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le nœud feuille comprend de la circuiterie électronique configurée pour mettre en œuvre les procédés décrits en relation avec les Figs. 4, 5 et 7.

Il est à remarquer ici qu'un nœud doté uniquement de moyens de communication radio peut comporter la totalité du logiciel permettant la mise en œuvre du protocole de la spécification pour les réseaux hybrides PLC et RF tel que par exemple G3-PLC hybride ou PRIME hybride ou les réseaux RF uniquement tel que par exemple Wi-SUN. Une information prédéterminée indique au nœud doté uniquement de moyens de communication radio que seule une partie du protocole doit être implémentée. La Fig. 3 illustre schématiquement l'architecture d'un nœud doté de moyens de communication radio et CPL selon un mode de réalisation.

Selon l'exemple d'architecture matérielle représenté à la Fig. 3, les nœuds M11 à M16, M21 à M26, comprennent, reliés par un bus de communication 300 : un processeur ou CPU (« Central Processing Unit » en anglais) 301 ; une mémoire vive RAM (« Random Access Memory » en anglais) 302 ; une mémoire morte ROM (« Read Only Memory » en anglais) 303 ; une unité de stockage telle qu'un disque dur (ou un lecteur de support de stockage, tel qu'un lecteur de cartes SD (« Secure Digital » en anglais) 304 ; une interface de communication radio RF 305 permettant au nœud de communiquer avec au moins un nœud feuille, les nœuds dotés de moyens de communication radio et CPL et le concentrateur de données auquel ils sont reliés et une interface de communication PLC 305 permettant au nœud de communiquer avec les nœuds dotés de moyens de communication radio et CPL et le concentrateur de données auquel ils sont reliés.

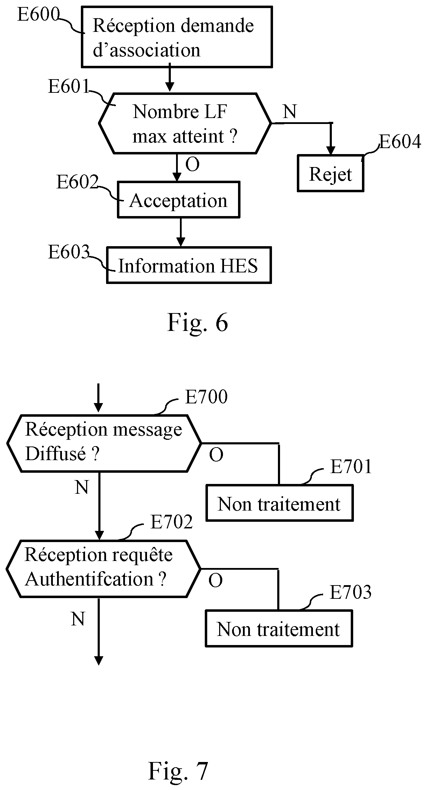

Le processeur 301 est capable d'exécuter des instructions chargées dans la RAM 202 à partir de la ROM 303, d'une mémoire externe (non représentée), d'un support de stockage (tel qu'une carte SD), ou d'un réseau de communication. Lorsque le nœud est mis sous tension, le processeur 301 est capable de lire de la RAM 302 des instructions et de les exécuter. Ces instructions forment un programme d'ordinateur causant la mise en œuvre, par le processeur 301, de tout ou partie du procédé décrit en relation avec la Fig. 6.

Le procédé décrit ci-après en relation avec la Fig. 6 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le nœud comprend de la circuiterie électronique configurée pour mettre en œuvre le procédé décrit en relation avec la Fig. 6.

La Fig.4 illustre un exemple d'un procédé d'authentification et de création de route exécuté par un nœud feuille selon un mode de réalisation.

A l'étape E400, une procédure d'authentification débute.

A l'étape suivante E401, le nœud feuille vérifie si une liste de nœuds susceptibles d'être un parent est vide. La liste de nœuds est obtenue en effectuant une opération de découverte du voisinage et en collectant toutes les réponses émises par les nœuds dotés de moyens de communication radio et CPL voisins.

Dans l'affirmative, le nœud feuille passe à l'étape E405. Dans la négative, le nœud feuille passe à l'étape E402.

A l'étape E402, le nœud feuille sélectionne un nœud doté de moyens de communication radio et CPL dans la liste. Par exemple le nœud feuille sélectionne le nœud doté de moyens de communication radio et CPL pour lequel le signal reçu a le meilleur indicateur de qualité de lien et envoie un message de demande d'authentification à destination du nœud sélectionné.

Lorsque le nœud sélectionné reçoit le message, celui-ci transfère la requête au concentrateur de données qui la transfère au système tête de réseau HES qui authentifie ou non le nœud. La réponse comprenant une clé d'identification est transférée au nœud feuille par l'intermédiaire du concentrateur de données et du nœud sélectionné.

A l'étape E403, le nœud feuille vérifie si l'authentification a été acceptée.

Dans l'affirmative, le nœud feuille passe à l'étape E406. Dans la négative, le nœud feuille passe à l'étape E404.

A l'étape E404, le nœud feuille vérifie si un nombre maximal de tentatives d'authentification est atteint.

Dans l'affirmative, le nœud feuille passe à l'étape E405 et passe pendant une durée prédéterminée dans un mode dit de veille dans lequel seule la mesure de consommation de fluide est effectuée et dans lequel les moyens de communication radio sont désactivés.

Dans la négative, le nœud feuille retourne à l'étape E400.

A l'étape E406, le nœud feuille passe à l'état authentifié et devient éligible pour établir une route vers le nœud sélectionné et transfère au nœud sélectionné une requête de création de route entre le nœud feuille et le nœud sélectionné. Le nœud feuille mémorise l'identifiant du nœud sélectionné.

Si le nœud sélectionné accepte la création de la route, le nœud sélectionné met à jour une table de routage et en informe le système tête de réseau via le concentrateur de données.

A l'étape E407, le nœud feuille vérifie si la demande de création de route a été acceptée. Dans l'affirmative, le nœud feuille passe à l'étape E408, le lien de communication est ainsi créé à l'étape E408.

Dans la négative, le nœud feuille passe à l'étape E405.

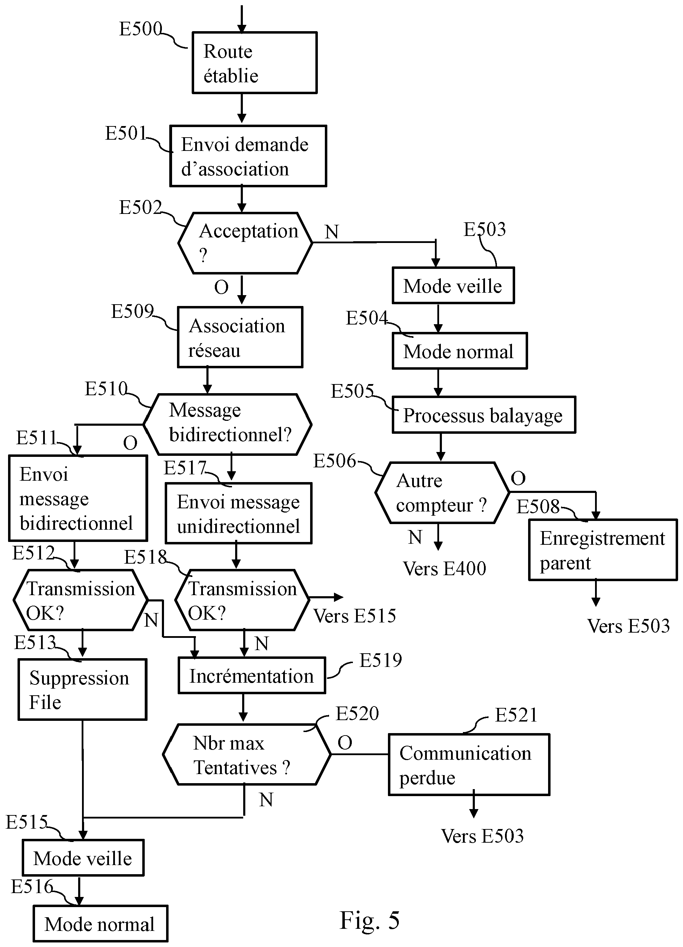

La Fig.5 illustre un exemple d'un procédé d'association exécuté par un nœud doté uniquement de moyens de communication radio selon un mode de réalisation.

A l'étape E500, la route a été établie conformément à l'algorithme tel que décrit en référence à la Fig. 4.

A l'étape E501, le nœud feuille commande le transfert d'un message à destination du nœud avec lequel la route a été créée, de demande d'association.

A l'étape E502, le nœud feuille vérifie si la requête d'association a été acceptée. Dans l'affirmative, le nœud feuille passe à l'étape E509, dans la négative, le nœud feuille passe à l'étape E503.

A l'étape E503, le nœud feuille passe dans le mode veille tel que décrit en référence à l'étape E405 de la Fig. 4.

A l'issue de la durée prédéterminée, le nœud feuille passe à l'étape E505 dans un mode dit normal dans lequel l'interface radio est activée.

A l'étape E505, le nœud feuille exécute un processus de balayage ou de découverte du voisinage et en collectant toutes les réponses émises par les nœuds dotés de moyens de communication radio et CPL voisins.

A l'étape E506, le nœud feuille vérifie si un nœud autre que le nœud ayant refusé l'association est détecté à la suite du balayage.

Dans l'affirmative, le nœud feuille passe à l'étape E508, exécute l'algorithme tel que décrit en référence à la Fig. 4 pour s'authentifier par l'intermédiaire du nœud autre que le nœud ayant refusé l'association et créer une route avec le nœud autre que le nœud ayant refusé l'association.

Cette opération terminée, le nœud feuille retourne à l'étape E503.

Dans la négative, le nœud feuille passe de l'étape E506 à l'étape E400.

A l'étape E509, le nœud feuille est alors associé au réseau. L'acceptation de l'association comporte en outre une information indiquant si le nœud feuille doit envoyer un message de type unidirectionnel ou bidirectionnel.

A l'étape E510, le nœud feuille vérifie si un message bidirectionnel doit être envoyé. Dans l'affirmative, le nœud feuille passe à l'étape E511. Dans la négative, le nœud feuille passe à l'étape E517.

A l'étape E511, le nœud feuille reçoit un message de type requête du nœud auquel il est associé et en réponse lui envoie un nouveau message.

Le nœud auquel le nœud feuille est associé envoie un message d'acquittement en cas de bonne réception du message émis par le nœud feuille.

A l'étape E512, le nœud feuille vérifie si le message d'acquittement est bien reçu. Dans l'affirmative, le nœud feuille passe à l'étape E513. Dans la négative, le nœud feuille passe à l'étape E519.

A l'étape E513, le nœud feuille supprime d'une file d'attente le message de type requête reçu et passe à l'étape E515 pour se mettre dans un mode de veille pendant une durée prédéterminée.

A l'issue de la durée prédéterminée, le nœud feuille passe à l'étape E516 dans un mode dit normal dans lequel l'interface radio est activée.

A l'étape E517, le nœud feuille envoie un message au nœud auquel il est associé et en réponse, le nœud auquel le nœud feuille est associé envoie un message d'acquittement en cas de bonne réception du message émis par le nœud feuille.

A l'étape E518, le nœud feuille vérifie si le message d'acquittement est bien reçu. Dans l'affirmative, le nœud feuille passe à l'étape E515. Dans la négative, le nœud feuille passe à l'étape E519.

A l'étape E519, le nœud feuille incrémente une variable représentative du nombre de retransmissions effectuées pour le message.

A l'étape E520, le nœud feuille vérifie si la variable incrémentée à l'étape E519 est égale à un nombre maximum de tentatives d'envois du message.

Dans l'affirmative, le nœud feuille passe à l'étape E521. Dans la négative, le nœud feuille passe à l'étape E515.

A l'étape E521, le nœud feuille détermine que la communication avec le nœud auquel il est associé est interrompue et retourne à l'étape E503.

La Fig. 6 illustre un exemple d'un procédé d'association exécuté par un nœud doté de moyens de communication radio et CPL selon un mode de réalisation.

A l'étape E600, le nœud doté de moyens de communication radio et CPL reçoit d'un nœud feuille avec lequel une route a été créée, un message de demande d'association comme décrit à l'étape E501 de la Fig. 5.

A l'étape E601, le nœud doté de moyens de communication radio et CPL vérifie si le nombre de nœuds feuilles qui lui sont associés est égal à un nombre maximum de nœuds feuilles qui lui sont associés.

Dans l'affirmative, le nœud doté de moyens de communication radio et CPL envoie à l'étape E604 un message de rejet de l'association. Dans la négative, le nœud doté de moyens de communication radio et CPL commande à l'étape E602 le transfert d'un message d'acceptation de l'association et informe le système de tête de réseau HES de l'association à l'étape E603.

La Fig.7 illustre un exemple d'un procédé de traitement de messages exécuté par un nœud doté uniquement de moyens de communication radio selon un mode de réalisation.

A l'étape E700, le nœud doté uniquement de moyens de communication radio ou nœud feuille vérifie si un message diffusé est reçu. Dans l'affirmative, le nœud feuille passe à l'étape E701 et ne traite pas le message reçu.

Dans la négative, le nœud feuille passe à l'étape E702.

A l'étape E702, le nœud feuille vérifie si un message comprenant une requête d'authentification est reçu. Dans l'affirmative, le nœud feuille passe à l'étape E703 et ne traite pas le message reçu.

Dans la négative, le nœud feuille retourne à l'étape E700.

Il est à remarquer ici que l'ordre des étapes E700 et E702 peut être inversé.

De ce fait, la vérification de la réception d'un message comprenant une requête d'authentification n'est pas conditionnelle à la non-réception d'un message diffusé et la vérification de la réception d'un message diffusé n'est pas conditionnelle à la vérification de la réception d'un message comprenant une requête d'authentification. Ces étapes de vérification peuvent être effectuées en parallèle ou dans n'importe quel ordre.

## Revendications

1. Procédé de communication dans un réseau de communication comportant des nœuds dotés de moyens de communication radio et CPL, un concentrateur de données et les nœuds dotés de moyens de communication radio et CPL formant un réseau de communication maillé, les nœuds comportant des nœuds dotés de moyens de communication radio et CPL jouant un rôle de relais pour augmenter la portée des communications dans le réseau de communication maillé, les nœuds dotés de moyens de communication radio et CPL communiquant à l'aide d'un protocole de communication prédéterminé, traitant des messages diffusés et traitant des requêtes d'authentification d'autres nœuds, **caractérisé en ce que** le système comporte en outre des nœuds dotés de moyens de communication uniquement radio aptes à communiquer en partie conformément au même protocole utilisé par les nœuds dotés de moyens de communication radio et CPL et **en ce que** le procédé comporte les étapes, exécutées par chaque nœud doté de moyens de communication uniquement radio, de :
- réception (E700) de messages diffusés,
- non traitement (E701) des messages diffusés,
- réception (E702) de messages de requête d'association,
- non traitement (E703) des messages de requête d'association.

2. Procédé selon la revendication 1, **caractérisé en ce que** lorsqu'un nœud doté de moyens de communication uniquement radio est introduit dans le réseau de communication, le nœud doté de moyens de communication uniquement radio :
- sélectionne un nœud doté de moyens de communication radio et CPL,
- transfère un message au nœud sélectionné pour une authentification du nœud doté de moyens de communication uniquement radio dans le réseau de communication,
- passe dans un mode de fonctionnement dans lequel les moyens de communication radio sont désactivés pendant une période prédéterminée si l'authentification n'a pas réussi,
- transfère un message au nœud sélectionné pour une création d'une route avec le nœud sélectionné si l'authentification a réussi,
- passe dans un mode de fonctionnement dans lequel les moyens de communication radio sont désactivés pendant une période prédéterminée si la création de route n'a pas réussi.

3. Procédé selon la revendication 2, **caractérisé en ce que** si la création de la route a réussi, le nœud doté de moyens de communication uniquement radio :
- transfère un message au nœud sélectionné pour une association du nœud doté de moyens de communication uniquement radio avec le nœud sélectionné,
- transfère un message au nœud auquel il est associé si l'association a réussi,
- passe dans le mode de fonctionnement dans lequel les moyens de communication radio sont désactivés pendant une période prédéterminée si le message a été reçu par le nœud auquel il est associé.

4. Procédé selon la revendication 3, **caractérisé en ce que** si la création de la route a réussi, le nœud doté de moyens de communication uniquement radio :
- passe dans le mode de fonctionnement dans lequel les moyens de communication radio sont désactivés pendant une période prédéterminée si l'association n'a pas réussi.

5. Procédé selon la revendication 4, **caractérisé en ce que** à l'issue de la période prédéterminée, le nœud passe dans un mode dans lequel les moyens de communication radio sont réactivés et le nœud :
- recherche un nœud doté de moyens de communication radio et CPL différent du nœud avec lequel l'association n'a pas réussi.

6. Système de communication dans un réseau de communication comportant des nœuds dotés de moyens de communication radio et CPL, un concentrateur de données et les nœuds dotés de moyens de communication radio et CPL formant un réseau de communication maillé, les nœuds comportant des nœuds dotés de moyens de communication radio et CPL jouant un rôle de relais pour augmenter la portée des communications dans le réseau de communication maillé, les nœuds dotés de moyens de communication radio et CPL communiquant à l'aide d'un protocole de communication prédéterminé, traitant des messages diffusés et traitant des requêtes d'authentification d'autres nœuds, **caractérisé en ce que** le système comporte en outre des nœuds dotés de moyens de communication uniquement radio aptes à communiquer en partie conformément au même protocole utilisé par les nœuds dotés de moyens de communication radio et CPL et **en ce que** les nœuds dotés de moyens de communication uniquement radio comportent :
- des moyens de réception de messages diffusés,
- des moyens de non traitement des messages diffusés,
- des moyens de réception de messages de requête d'association,
- des moyens de non traitement des messages de requête d'association.

7. Système selon la revendication 6, **caractérisé en ce que** le concentrateur de données est configuré pour collecter, auprès des nœuds dotés de moyens de communication radio et CPL, des données de relevés de consommation énergétique d'installations électriques que lesdits nœuds sont respectivement en charge de surveiller et les nœuds dotés de moyens de communication uniquement radio sont des compteurs de fluide intelligents.

8. Un produit programme d'ordinateur **caractérisé en ce qu'**il comprend des instructions pour implémenter, par un équipement, le procédé selon l'une quelconque des revendications 1 à 5, lorsque ledit programme est exécuté par un processeur d'un nœud.

9. Un support de stockage **caractérisé en ce qu'**il stocke un programme d'ordinateur comprenant des instructions pour implémenter, par un équipement, le procédé selon l'une quelconque des revendications 1 à 5, lorsque ledit programme est exécuté par un processeur d'un nœud.

## Patentansprüche

1. Kommunikationsverfahren in einem Kommunikationsnetzwerk, das Knoten, die über Funk- und PLC-Kommunikationsmittel verfügen, umfasst, wobei ein Datenkonzentrator und die Knoten, die über Funk- und PLC-Kommunikationsmittel verfügen, ein Mesh-Kommunikationsnetzwerk bilden, wobei die Knoten Knoten, die über Funk- und PLC-Kommunikationsmittel verfügen, umfassen, die die Rolle einer Zwischenstation spielen, um die Reichweite der Kommunikationen in dem Mesh-Kommunikationsnetzwerk zu erhöhen, wobei die Knoten, die über Funk- und PLC-Kommunikationsmittel verfügen, mit Hilfe eines vorgegebenen Kommunikationsprotokolls kommunizieren, übertragene Nachrichten verarbeiten und Authentifizierungsanfragen anderer Knoten verarbeiten, **dadurch gekennzeichnet, dass** das System ferner Knoten, die ausschließlich über Funkkommunikationsmittel verfügen, umfasst, die dazu fähig sind, teilweise gemäß demselben Protokoll, das auch von den Knoten, die über Funk- und PLC-Kommunikationsmittel verfügen, verwendet wird, zu kommunizieren, und dass das Verfahren die folgenden Schritte umfasst, die durch jeden Knoten, der ausschließlich über Funkkommunikationsmittel verfügt, ausgeführt werden:
- Empfangen (E700) von übertragenen Nachrichten,
- Nichtverarbeiten (E701) der übertragenen Nachrichten,
- Empfangen (E702) von Assoziierungsanfragenachrichten,
- Nichtverarbeiten (E703) der Assoziierungsanfragenachrichten.

2. Verfahren nach Anspruch 1, **dadurch gekennzeichnet, dass**, wenn ein Knoten, der ausschließlich über Funkkommunikationsmittel verfügt, in das Kommunikationsnetzwerk eingebracht wird, der Knoten, der ausschließlich über Funkkommunikationsmittel verfügt:
- einen Knoten, der über Funk- und PLC-Kommunikationsmittel verfügt, auswählt,
- eine Nachricht an den ausgewählten Knoten sendet, um den Knoten, der ausschließlich über Funkkommunikationsmittel verfügt, in dem Kommunikationsnetzwerk zu authentifizieren,
- in einen Betriebsmodus übergeht, in dem die Funkkommunikationsmittel während einer vorgegebenen Dauer deaktiviert sind, wenn die Authentifizierung nicht erfolgreich war,
- eine Nachricht an den ausgewählten Knoten sendet, um eine Verbindung zu dem ausgewählten Knoten herzustellen, wenn die Authentifizierung erfolgreich war,
- in einen Betriebsmodus übergeht, in dem die Funkkommunikationsmittel während einer vorgegebenen Dauer deaktiviert sind, wenn die Verbindungsherstellung nicht erfolgreich war.

3. Verfahren nach Anspruch 2, **dadurch gekennzeichnet, dass**, wenn die Herstellung der Verbindung erfolgreich war, der Knoten, der ausschließlich über Funkkommunikationsmittel verfügt:
- eine Nachricht an den ausgewählten Knoten sendet, um den Knoten, der ausschließlich über Funkkommunikationsmittel verfügt, mit dem ausgewählten Knoten zu assoziieren,
- eine Nachricht an den Knoten, mit dem er assoziiert ist, sendet, wenn die Assoziierung erfolgreich war,
- in den Betriebsmodus übergeht, in dem die Funkkommunikationsmittel während einer vorgegebenen Dauer deaktiviert sind, wenn die Nachricht durch den Knoten, mit dem er assoziiert ist, empfangen wurde.

4. Verfahren nach Anspruch 3, **dadurch gekennzeichnet, dass**, wenn die Herstellung der Verbindung erfolgreich war, der Knoten, der ausschließlich über Funkkommunikationsmittel verfügt:
- in den Betriebsmodus übergeht, in dem die Funkkommunikationsmittel während einer vorgegebenen Dauer deaktiviert sind, wenn die Assoziierung nicht erfolgreich war.

5. Verfahren nach Anspruch 4, **dadurch gekennzeichnet, dass** der Knoten nach Ablauf der vorgegebenen Dauer in einen Modus übergeht, in dem die Funkkommunikationsmittel erneut aktiviert sind, und der Knoten:
- einen Knoten, der über Funk- und PLC-Kommunikationsmittel verfügt, sucht, der sich von dem Knoten, mit dem die Assoziierung nicht erfolgreich war, unterscheidet.

6. Kommunikationssystem in einem Kommunikationsnetzwerk, das Knoten, die über Funk- und PLC-Kommunikationsmittel verfügen, umfasst, wobei ein Datenkonzentrator und die Knoten, die über Funk- und PLC-Kommunikationsmittel verfügen, ein Mesh-Kommunikationsnetzwerk bilden, wobei die Knoten Knoten, die über Funk- und PLC-Kommunikationsmittel verfügen, umfassen, die die Rolle einer Zwischenstation spielen, um die Reichweite der Kommunikationen in dem Mesh-Kommunikationsnetzwerk zu erhöhen, wobei die Knoten, die über Funk- und PLC-Kommunikationsmittel verfügen, mit Hilfe eines vorgegebenen Kommunikationsprotokolls kommunizieren, übertragene Nachrichten verarbeiten und Authentifizierungsanfragen anderer Knoten verarbeiten, **dadurch gekennzeichnet, dass** das System ferner Knoten, die ausschließlich über Funkkommunikationsmittel verfügen, umfasst, die dazu fähig sind, teilweise gemäß demselben Protokoll, das auch von den Knoten, die über Funk- und PLC-Kommunikationsmittel verfügen, verwendet wird, zu kommunizieren, und dass die Knoten, die ausschließlich über Funkkommunikationsmittel verfügen, Folgendes umfassen:
- Mittel zum Empfangen von übertragenen Nachrichten,
- Mittel zum Nichtverarbeiten der übertragenen Nachrichten,
- Mittel zum Empfangen von Assoziierungsanfragenachrichten,
- Mittel zum Nichtverarbeiten der Assoziierungsanfragenachrichten.

7. System nach Anspruch 6, **dadurch gekennzeichnet, dass** der Datenkonzentrator dazu konfiguriert ist, von den Knoten, die über Funk- und PLC-Kommunikationsmittel verfügen, Messdaten über den Energieverbrauch von elektrischen Anlagen, zu deren Überwachung die Knoten jeweils eingesetzt sind, zu sammeln, und die Knoten, die ausschließlich über Funkkommunikationsmittel verfügen, intelligente Durchflussmesser sind.

8. Computerprogrammprodukt, **dadurch gekennzeichnet, dass** es Anweisungen zur Umsetzung, durch eine Ausrüstung, des Verfahrens nach einem der Ansprüche 1 bis 5 beinhaltet, wenn das Programm durch einen Prozessor eines Knotens ausgeführt wird.

9. Speicherträger, **dadurch gekennzeichnet, dass** er ein Computerprogramm speichert, das Anweisungen zur Umsetzung, durch eine Ausrüstung, des Verfahrens nach einem der Ansprüche 1 bis 5 beinhaltet, wenn das Programm durch einen Prozessor eines Knotens ausgeführt wird.

## Claims

1. Method for communicating in a communication network comprising nodes provided with radio and PLC communication means, a data concentrator, and the nodes provided with radio and PLC communication means forming a mesh communication network, the nodes comprising nodes provided with radio and PLC communication means fulfilling a role of relay for increasing the range of the communications in the mesh communication network, the nodes provided with radio and PLC communication means communicating by means of a predetermined communication protocol, processing broadcast messages and processing authentication requests from other nodes, **characterised in that** the system further comprises nodes provided with solely radio communication means able to communicate partly in accordance with the same protocol used by the nodes provided with radio and PLC communication means, and **in that** the method comprises the steps, performed by each node provided with solely radio communication means, of:
- receiving (E700) broadcast messages,
- not processing (E701) the broadcast messages,
- receiving (E702) join-request messages,
- not processing (E703) the join-request messages.

2. Method according to claim 1, **characterised in that**, when a node provided with solely radio communication means is introduced into the communication network, the node provided with solely radio communication means:
- selects a node provided with radio and PLC communication means,
- transfers a message to the node selected for authentication of the node provided with solely radio communication means in the communication network,
- goes into an operating mode wherein the radio communication means are deactivated for a predetermined period if the authentication has not succeeded,
- transfers a message to the node selected for creating a route with the selected node if the authentication has succeeded,
- goes into an operating mode wherein the radio communication means are deactivated for a predetermined period if the route creation has not succeeded.

3. Method according to claim 2, **characterised in that**, if the creation of the route has succeeded, the node provided with solely radio communication means:
- transfers a message to the node selected for joining of the node provided with solely radio communication means with the selected node,
- transfers a message to the node with which it is joined if the joining has succeeded,
- goes into the operating mode wherein the radio communication means are deactivated for a predetermined period if the message has been received by the node with which it is joined.

4. Method according to claim 3, **characterised in that**, if the creation of the route has succeeded, the node provided with solely radio communication means:
- goes into the operating mode wherein the radio communication means are deactivated for a predetermined period if the joining has not succeeded.

5. Method according to claim 4, **characterised in that**, at the end of the predetermined period, the node goes into a mode wherein the radio communication means are reactivated, and the node:
- seeks a node provided with radio and PLC communication means different from the node with which the joining has not succeeded.

6. System for communicating in a communication network comprising nodes provided with radio and PLC communication means, a data concentrator, and the nodes provided with radio and PLC communication means forming a mesh communication network, the nodes comprising nodes provided with radio and PLC communication means fulfilling a role of relay for increasing the range of the communications in the mesh communication network, the nodes provided with radio and PLC communication means communicating by means of a predetermined communication protocol, processing broadcast messages and processing authentication requests from other nodes, **characterised in that** the system further comprises nodes provided with solely radio communication means able to communicate partly in accordance with the same protocol used by the nodes provided with radio and PLC communication means, and **in that** the nodes provided with solely radio communication means comprise:
- means for receiving broadcast messages,
- means for not processing the broadcast messages,
- means for receiving join-request messages,
- means for not processing the join-request messages.

7. System according to claim 6, **characterised in that** the data concentrator is configured to collect, from the nodes provided with radio and PLC communication means, reading data on the energy consumption of electrical installations that said nodes are respectively responsible for monitoring, and the nodes provided with solely radio communication means are smart fluid meters

8. A computer program product **characterised in that** it comprises instructions for implementing, by an item of equipment, the method according to any one of claims 1 to 5, when said program is executed by a processor of a node.

9. A storage medium **characterised in that** it stores a computer program comprising instructions for implementing, by an item of equipment, the method according to any one of claims 1 to 5, when said program is executed by a processor of a node.
